# EUROPÄISCHE PATENTSCHRIFT

(11) **EP 2 735 779 B1**
(45) Veröffentlichungstag und Bekanntmachung des Hinweises auf die Patenterteilung: **08.07.2015**
(21) Anmeldenummer: 12194316.1
(22) Anmeldetag: 26.11.2012
(51) Int. Cl.: F16L 5/06, H02G 3/22

(54) **Vorrichtung zur abgedichteten Durchführung von Langformteilen**
Device for the sealed feedthrough of long moulded parts
Dispositif de passage étanche de pièces longilignes

(43) Veröffentlichungstag der Anmeldung: 28.05.2014
(73) Patentinhaber: Lapp Engineering & Co., 6330 Cham (CH)
(72) Erfinder: Charcenko, Valerij, 76701 Kromeriz (CZ); Jurak, Marek, 76001 Zlín (CZ)
(74) Vertreter: Rutz & Partner

(56) Entgegenhaltungen:
- DE-A1-102007 017 918
- DE-B3-102006 043 217

## Beschreibung

Die vorliegende Erfindung betrifft eine Vorrichtung zur abgedichteten Durchführung von Langformteilen durch eine Montagewand.

Zur Führung von Medien, wie Flüssigkeiten, Gasen oder Elektrizität, werden Langformteile, wie Schläuche, Rohre oder Kabel verwendet, die oft durch Öffnungen in Wänden hindurchgeführt werden müssen.

In der Chemie-, Arzneimittel- und Lebensmittelindustrie bestehen strikte Anforderungen an die Sauberkeit der Produktionsanlagen und alle ihre Komponenten. Dabei ist es wichtig, dass Öffnungen, durch die hindurch Langformteile geführt werden, dicht abgeschlossen werden. Ferner sollen die Vorrichtungen zur Durchführung der Langformteile möglichst nicht verschmutzen und korrodieren und mit geringem Aufwand gereinigt werden können.

Aus der DE102006043217B3 ist eine Vorrichtung zur abgedichteten Durchführung von Langformteilen bzw. eine Kabel - oder Schlauchverschraubung bekannt, die einen mit einer Gehäusewand verbindbaren hohlzylinderförmigen Stutzen mit einem Aussengewinde aufweist, auf das eine mit einem Innengewinde versehene Hutmutter aufsetzbar ist, mittels der ein hohlzylinderförmiges Klemmelement und ein ringförmiges Dichtungselement an ein durch den Stutzen hindurchgeführtes Langformteil andrückbar sind.

Gemäss der DE102006043217B3 bestand bei vorbekannten Kabel - oder Schlauchverschraubungen das Problem, dass selbst bei vollständig auf den Stutzen aufgeschraubter Hutmutter noch ein Teil des Aussengewindes des Stutzens frei lag. Dort konnten sich Schmutz und andere Ablagerungen absetzen, weshalb die hohen Anforderungen an die Reinheit oft nicht eingehalten werden konnten.

Aus der DE102006043217B3 ist ferner bekannt, dass das Aussengewinde des Stutzens bekannter Verschraubungen nicht mit so wenigen Gewindegängen ausgebildet werden konnte, dass die Hutmutter in aufgeschraubtem Zustand das Aussengewinde auf jeden Fall vollständig überdeckte. Je nach Durchmesser des durch die Verschraubung verlaufenden Langformteils muss die Hutmutter nämlich mehr oder weniger weit auf den Stutzen geschraubt werden, damit das Klemmelement und das Dichtungsteil auch wirklich fest und dicht gegen die Aussenseite des Langformteils angerückt wird. In den nicht überdeckten Gewindegängen konnte sich daher jeweils Schmutz ansammeln, der nur mit erheblichem Aufwand beseitigt werden konnte.

In der DE102006043217B3 wurde daher vorgeschlagen, die Hutmutter der Kabel- oder Schlauchverschraubung derart mit dem Stutzen zu verbinden, dass die Hutmutter wohl drehbar, axial gegenüber dem Stutzen jedoch nicht verschiebbar ist und das Aussengewinde des Stutzens vollständig überdeckt. Dazu ist an der Innenseite der Hutmutter ein Innengewinde ausgebildet, das in ein Aussengewinde eines Gleitelements eingreift, welches um die Längsachse des Stutzens drehfest, aber in der Richtung der Längsachse verschiebbar angeordnet ist. Anstelle der Hutmutter wird bei dieser Vorrichtung somit das Gleitelement als Druckelement verwendet.

Zur Verbindung der Hutmutter wird diese von aussen über den Stutzen gestülpt und mittels einer Clip- oder Rast-Verbindung mit dem Stutzen gekoppelt. Der Stutzen kann somit ohne Aussengewinde ausgebildet werden, weshalb die Hauptursache für die Ablagerungen an der Aussenseite des Stutzens entfällt.

Zur Befestigung der Hutmutter wird vorgeschlagen, einen Kunststoffring in eine an der Aussenseite des Stutzens vorgesehene Ringnut einzusetzen, der beim Aufsetzen der Hutmutter elastisch radial nach innen gedrückt wird. Bei dieser Ausgestaltung sind somit zusätzliche Vorrichtungsteile erforderlich, welche mit entsprechendem Aufwand gefertigt und zusammengesetzt werden müssen. Sofern die Hutmutter sicher gehalten werden soll, so ist der Kunststoffring entsprechend massiv auszugestalten. In diesem Fall ist jedoch erhebliche Kraft erforderlich, um die Verbindung zwischen dem Stutzen und der Hutmutter zu realisieren. Sofern der Kunststoffring hingegen weniger massiv ausgeführt ist, kann sich die Verbindung leicht lösen. Ferner unterliegt der Kunststoffring einer Belastung, welche zu dessen Zerstörung führen kann. Weiter erfolgt durch den Kunststoffring keine Abdichtung, weshalb ein zusätzlicher Dichtungsring eingesetzt werden muss, welcher beim Drehen der Hutmutter einer mechanischen Belastung ausgesetzt wird. Das Gleitelement, welches innerhalb der Hutmutter verschiebbar gehalten ist, ist zudem entsprechend zu lagern, damit dieses bei der Handhabung der Vorrichtung nicht verklemmen kann.

Insgesamt resultiert eine aufwändige Lösung mit zahlreichen Vorrichtungsteilen, die mit einem entsprechenden Aufwand hergestellt, zusammengesetzt und bedient werden müssen und die einer erheblichen Belastung ausgesetzt sind.

Aus der EP1675244A2 ist eine Kabel- oder Schlauchverschraubung für abgedichtete Leitungsdurchführungen bekannt, die einen rohrförmigen Stutzen, eine damit verschraubbare Hutmutter sowie ein zwischen dem Stutzen und der Hutmutter angeordnetes Dicht- und Klemmteil umfasst, das durch ein einziges Teil, nämlich einen elastischen Dichteinsatz gebildet ist. Auch bei dieser Kabel- oder Schlauchverschraubung kann ein Teil des Aussengewindes des Stutzens insbesondere dann frei liegen, wenn ein Langformteil bzw. ein Rohr oder Kabel mit grösserem Durchmesser eingesetzt ist. Weiterhin ist die Gewindeverbindung zwischen dem Stutzen und der Hutmutter nicht optimal abgedichtet.

Der vorliegenden Erfindung liegt daher die Aufgabe zugrunde, eine verbesserte Vorrichtung zur abgedichteten Durchführung von Langformteilen zu schaffen.

Insbesondere ist eine Vorrichtung zu schaffen, welche Langformteile mit unterschiedlichem Durchmesser aufnehmen und dicht umschliessen kann.

Die Vorrichtung soll kompakt aufgebaut sein und eine weitgehend glatte Aussenfläche aufweisen, an der sich Verunreinigungen nur schwerlich ablagern können, und die mit geringem Aufwand gereinigt werden kann. Insbesondere soll vermieden werden, dass Gewindeelemente nach aussen offen liegen.

Die Vorrichtung soll zudem mit einer möglichst geringen Anzahl von Vorrichtungsteilen einfach aufgebaut und kostengünstig herstellbar sein.

Weiterhin soll die Vorrichtung einfach bedienbar und beim Gebrauch keiner wesentlichen Belastung ausgesetzt sein, so dass Verschleisserscheinungen vermieden werden. Insbesondere sollen keine feinen Vorrichtungsteile benötigt werden, die einer erheblichen mechanischen Belastung ausgesetzt sind.

Diese Aufgabe wird mit einer Vorrichtung zur abgedichteten Durchführung von Langformteilen gelöst, welche die in Anspruch 1 angegebenen Merkmale aufweist. Vorteilhafte Ausgestaltungen der Erfindung sind in weiteren Ansprüchen angegeben.

Die Vorrichtung, die der abgedichteten Durchführung eines Langformteils, wie eines Rohrs, eines Schlauchs oder eines Kabels, durch eine Öffnung in einer Montagewand dient, umfasst einen mit der Montagewand verbindbaren hohlzylinderförmigen Stutzen, der einen Stutzenkanal und ein erstes Aussengewinde aufweist, eine Hutmutter, die eine Durchführungsöffnung und ein mit dem ersten Aussengewinde des Stutzens verbundenes Innengewinde aufweist, sowie ein innerhalb der Hutmutter angeordnetes Dichtungsteil, welches einen Aufnahmekanal aufweist. Das Langformteil ist somit durch den Stutzenkanal im Stutzen, den Aufnahmekanal im Dichtungsteil sowie die Durchführungsöffnung in der Hutmutter durchführbar.

Erfindungsgemäss weist der Stutzen benachbart zum ersten Aussengewinde eine zylindrische Dichtungswand auf. Die Hutmutter weist benachbart zum Innengewinde einen der Dichtungswand zugewandten Abschlussflansch auf, welcher einen Dichtungsring hält, der die Hutmutter vorzugsweise überragt und an der Dichtungswand anliegt und dicht anliegend axial entlang der Dichtungswand verschiebbar ist.

Nach der Montage der Durchführungsvorrichtung liegt der Dichtungsring daher stets an der zylindrischen Dichtungswand an, welche der Aussenseite eines hohlzylindrischen Teils des Stutzens oder der Aussenseite einer auf den Stutzen aufgesetzten Dichtungshülse entspricht. Gleichzeitig ist der Dichtungsring dicht abschliessend mit der Hutmutter verbunden, weshalb der Bereich zwischen der Hutmutter und dem Stutzen vollständig abgedichtet ist.

Die optionale Verwendung einer Dichtungshülse erlaubt den sparsamen Einsatz eines hochwertigen Materials. Anstelle des voluminösen Stutzens genügt es, lediglich die Dichtungshülse mit diesem hochwertigen Material zu fertigen. Die Hülse kann beispielsweise mittels eines Gewindes mit dem Stutzen verbunden werden. Falls der Stutzen selbst aus hochwertigem Material gefertigt ist, wird auf die Dichtungshülse vorzugsweise verzichtet.

Die Wandhöhe der Dichtungswand bzw. die Breite des zylinderförmigen Bereichs des Stutzens, entlang dem der Dichtungsring verschiebbar ist, ist entsprechend der Länge des Innengewindes der Hutmutter gewählt. Der Dichtungsring liegt daher bei allen Einstellungen der Hutmutter an der Dichtungswand an. Die Länge des Abschlussflansches und die Länge des Dichtungsrings sind dabei derart gewählt, dass das erste Aussengewinde des Stutzens von der Kombination des Abschlussflansches und des Dichtungsrings bei allen Einstellungen der Hutmutter vollständig überdeckt ist. Der Abschlussflansch kann ein relativ langes Zylindersegment bilden, welches einen relativ kurzen Dichtungsring hält und gegebenenfalls vollständig umschliesst. Alternativ kann nur ein kurzer Abschlussflansch vorgesehen sein, welcher einen Dichtungsring hält, der ein längeres Zylindersegment bildet. Der Abschlussflansch und der Dichtungsring bilden somit längere oder kürzere Ringelemente, insbesondere Ringflansche, bzw. Zylindersegmente, welche sich gegenseitig ergänzen, um das erste Aussengewinde zu überbrücken und sicherzustellen, dass der Dichtungsring stets an der zylindrischen Dichtungswand anliegt.

Der Übergangsbereich zwischen der Hutmutter bzw. dem Abschlussflansch der Hutmutter einerseits und dem Stutzen bzw. der Dichtungswand andererseits wird durch den Dichtungsring daher stets dicht abgeschlossen. Das Aussengewinde des Stutzens wird, unabhängig vom Durchmesser des installierten Langformteils, und der entsprechenden Position der Hutmutter stets vollständig überdeckt, so dass darin keine Schmutzablagerungen auftreten können.

Der Dichtungsring weist einen Ringkörper auf, der vorzugsweise hohlzylindrisch ausgebildet ist und an dem wenigstens ein Montageelement vorgesehen ist. Vorzugsweise weist der Ringkörper auf der der Hutmutter zugewandten Seite einen ersten Ringaussenflansch auf, der in eine Ringinnennut eingreift, die auf der Innenseite des Abschlussflanschs vorgesehen ist.

In einer weiteren vorzugsweisen Ausgestaltung weist der Ringkörper auf der von der Hutmutter abgewandten Seite einen zweiten Ringaussenflansch auf, der an der Unterseite des Abschlussflansches an einem Ringinnenflansch anliegt, der vorzugsweise durch die Ringinnennut begrenzt ist. Am Ringinnenflansch liegt daher auf der einen Seite der erste Ringaussenflansch und auf der anderen Seite der zweite Ringaussenflansch des Dichtungsrings an. Der am Abschlussflansch vorgesehene Ringinnenflansch drückt vorzugsweise an den Ringkörper des Dichtungsrings an, weshalb eine formschlüssige und mehrfach dicht abgeschlossene Verbindung zwischen dem Abschlussflansch und dem Dichtungsring resultiert. Zusätzlich wird der Dichtungsring gegen den Abschlussflansch gedrückt, wenn der Dichtungsring an der Dichtungswand anliegt.

Aufgrund der Elastizität des Dichtungsrings kann dieser in den Abschlussflansch eingeschoben werden. Damit dieser Vorgang leicht vollzogen werden kann, weisen der erste Ringaussenflansch des Dichtungsrings und der Ringinnenflansch des Abschlussflanschs vorzugsweise keilförmige Querschnitte und parallel zueinander ausgerichtete, konisch verlaufende Keilflächen auf, so dass der Abschlussflansch auf den Dichtungsring aufgesetzt und gegen diesen verschoben werden kann, bis der erste Aussenflansch des Dichtungsrings in die Ringinnennut im Abschlussflansch einschnappt.

Der zweite Aussenflansch des Dichtungsrings ist vorzugsweise hakenförmig nach oben gerichtet, so dass er beim Einschieben des Dichtungsrings vom Ringinnenflansch des Abschlussflanschs erfasst und nach aussen gebogen wird, wodurch zusätzlich der erste Ringaussenflansch gegen den Ringinnenflansch des Abschlussflanschs gezogen wird. Somit erfolgt nicht nur eine formschlüssige, sondern auch eine kraftschlüssige Verbindung zwischen dem Abschlussflansch und den Dichtungsring.

In einer weiteren vorzugsweisen Ausgestaltung weist der Ringkörper des Dichtungsrings auf der von der Hutmutter abgewandten Seite eine ringförmige Dichtungslippe auf, die gegen die Dichtungswand des Stutzens gerichtet ist und einen Kreis bildet, dessen Durchmesser geringer ist als der Durchmesser der zylindrischen Dichtungswand und dessen Durchmesser vorzugsweise geringer ist als der Innendurchmesser des Ringkörpers. Die elastische Dichtungslippe umschliesst die zylindrische Dichtungswand und legt mit einer Andruckkraft daran an, weshalb eine dichte kraftschlüssige Verbindung zwischen der Dichtungslippe und der zylindrischen Dichtungswand resultiert. Der Dichtungsring, welcher den Ringkörper, die beiden Aussenflansche und die Dichtungslippe vorzugsweise einstückig umfasst, wird daher aus einem Material gefertigt, welches über eine Elastizität verfügt, welche es erlaubt, einerseits den Dichtungsring in den Abschlussflansch der Hutmutter einzupressen und andererseits die Dichtungslippe zu dehnen und über die zylindrische Dichtungswand zu führen.

In einer vorzugsweisen Ausgestaltung wird zwischen dem ersten Aussengewinde und der zylindrischen Dichtungswand ein sich gegen das erste Aussengewinde verjüngender Übergangsbereich, vorzugsweise eine gerundete Schulter vorgesehen. Die Dichtungslippe kann daher gegen die gerundete Schulter bzw. den Übergangsbereich geführt und bei der Verschiebung entlang des Übergangsbereichs gedehnt werden, bis die Dichtungslippe die Höhe der Dichtungswand erreicht und entlang dieser verschoben werden kann. Durch den vorzugsweise gerundeten Übergangsbereich wird bewirkt, dass die Dichtungslippe bequem in den Arbeitsbereich überführt werden kann und dabei nur minimalen Belastungen ausgesetzt wird, wodurch Verletzungen der Dichtungslippe vermieden werden.

Vorzugsweise sind der Stutzen, die Hutmutter und der Dichtungsring derart dimensioniert, dass der Eingriff des ersten Aussengewindes des Stutzens in das Innengewinde der Hutmutter erfolgt, bevor die Dichtungslippe den Übergangsbereich erreicht hat. Die Verschiebung der Dichtungslippe entlang dem Übergangsbereich kann daher bequem durch Drehung der Hutmutter erfolgen. Der Innendurchmesser des Dichtungsrings ist dabei grösser als der Durchmesser des ersten Aussengewindes des Stutzens, so dass der Dichtungsring über das Aussengewinde des Stutzens bis zum Übergangsbereich geführt werden kann.

Der Dichtungsring besteht vorzugsweise aus einem Kunststoff, der widerstandsfähig gegen mechanische Beanspruchung und Einwirkungen chemischer Stoffe ist und gleichzeitig über die notwendige Elastizität verfügt, um die Dichtungslippe zu dehnen und den ersten Aussenflansch zu komprimieren. Vorzugsweise weist das Kunststoffmaterial einen Elastizitätsmodul auf, welcher in einem Bereich von 350 MPa bis 1000 MPa oder höher, vorzugsweise bei etwa 420 MPa liegt. Der Kunststoff soll ferner gute Gleiteigenschaften aufweisen, die gewährleisten, dass die Dichtungslippe trotz des vorzugsweise hohen Elastizitätsmoduls mit geringem Kraftaufwand entlang der zylindrischen Dichtungswand geführt werden kann. Vorzugsweise wird der Dichtungsring aus Polytetrafluorethylen PTFE gefertigt, wodurch eine hohe Resistenz gegen mechanische und chemische Einwirkungen sowie optimale Gleiteigenschaften erzielt werden.

Das innerhalb der Hutmutter vorgesehene Dichtungsteil kann ein einzelnes Element sein, welches beim Festziehen der Hutmutter komprimiert und einerseits gegen die Innenwand der Hutmutter und andererseits gegen das Langformteil angepresst wird. Um den dafür notwendigen Druck beim Festziehen der Hutmutter entwickeln zu können und das Dichtungsteil vorteilhaft zu formen, weist die Hutmutter ein Endstück mit einer domförmigen oder konusförmigen Innenwand auf, welches konzentrisch zur Vorrichtungssachse mit der Durchführungsöffnung versehen ist.

In einer vorzugsweisen Ausgestaltung wird innerhalb des Stutzens zudem ein Lamellenkorb vorgesehen, der einen der Durchführung des Langformteils dienenden Korbkanal und einen Lamellenkranz aufweist, der vorzugsweise oberhalb des ersten Aussengewindes des Stutzens innerhalb der Hutmutter gehalten ist. Im Lamellenkranz sitzt das hohlzylinderförmige Dichtungsteil. Beim Festziehen der Hutmutter werden die Lamellen gegen das Dichtungsteil gedrückt, wodurch dieses komprimiert und gegen das installierte Langformteil gedrückt wird. Vorzugsweise überragt das Dichtungsteil den Lamellenkranz, so dass dieses im Bereich der Durchführungsöffnung einerseits direkt an der domförmigen oder konusförmigen Innenwand des Endstücks der Hutmutter und andererseits am eingesetzten Langformteil anliegt. Der Lamellenkorb ist vorzugsweise aus biegeelastischem Material, beispielsweise einem hartelastischen Kunststoff mit einem Elastizitätsmodul von z.B.

Das Dichtungsteil ist vorzugsweise weichelastisch ausgebildet und weist vorzugsweise einen Elastizitätsmodul auf, der im Bereich von Bereich von 10 MPa bis 200 MPa liegt. Das Dichtungsteil wird beispielsweise aus Kautschuk, wie Silikonkautschuk, Fluorkautschuk, vorzugsweise einem Fluorelastomer gefertigt.

Der Lamellenkorb ist innerhalb des Stutzens vorzugsweise drehfest gehalten, wodurch gegenseitige Verschiebungen der Vorrichtungsteile und entsprechende Abnutzungen vermieden werden. Dazu wird im Stutzenkanal vorzugsweise ein Montageflansch mit wenigstens einer parallel zur Vorrichtungsachse ausgerichteten Haltenut vorgesehen, in die eine mit dem Lamellenkorb verbundene Halterippe einführbar ist. Die Halterippe ist vorzugsweise an einem Montagezylinder vorgesehen, der einen mit den Lamellen verbundenen Korbring trägt, welcher den Montagezylinder radial überragt und auf dem Montageflansch des Stutzens sitzt.

Auf der Innenseite weist der Montagezylinder vorzugsweise eine Innenschulter auf, auf der das hohlzylinderförmige Dichtungsteil abgestützt ist. Vorzugsweise ist die Innenschulter keilförmig gegen das Dichtungsteil ausgebildet, so dass dieses sicher gehalten wird und grössere Dichtungsflächen resultieren, an die das Dichtungsteil angepresst wird.

Der Stutzen kann in konventioneller Weise mit einer Montagewand verbunden werden. Beispielsweise wird der Stutzen mit einem zweiten Aussengewinde sowie einem Montageaussenflansch versehen, der zwischen dem ersten und dem zweiten Aussengewinde angeordnet ist. Das zweite Aussengewinde kann durch die Öffnung in der Montagewand hindurch geführt und mit einer Montagemutter fixiert werden. Auf der dem zweiten Aussengewinde zugewandten Seite des Montageaussenflanschs wird vorzugsweise eine Ringnut vorgesehen, in die ein ringförmiges Dichtungselement eingreifen kann, durch das die Verbindung zwischen dem Stutzen und der Montagewand abgedichtet wird. Damit Korrosionsschäden bei der Durchführungsvorrichtung vermieden werden, werden der Stutzen, die Hutmutter und, sofern vorgesehen, die Montagemutter vorzugsweise aus Edelstahl gefertigt. Es ist jedoch auch möglich, einzelne dieser Teile wahlweise aus hochwertigem Kunststoff zu fertigen.

Nachfolgend wird die Erfindung anhand von Zeichnungen näher erläutert. Dabei zeigt:
- Fig. 1: eine erfindungsgemässe Durchführungsvorrichtung 1, die, von aussen erkennbar, einen in einer Wandöffnung 11 einer Montagewand 10 montierten Stutzen 6, eine mit dem Stutzen 6 verschraubte Hutmutter 2, einen mit der Hutmutter 2 verbundenen Dichtungsring 4, ein an der Montagewand 10 anliegendes ringförmiges Dichtungselement 7 und eine Montagemutter 8 umfasst und in der ein durch die Wandöffnung 11 hindurchgeführtes Langformteil 9, ein Rohr, ein Schlauch oder ein Kabel, gehalten ist;
- Fig. 2: die Durchführungsvorrichtung 1 von Figur 1 in einem Schnitt durch die Hutmutter 2, den Dichtungsring 4 und das ringförmige Dichtungselement 7 entlang der in Figur 1 eingezeichneten Schnittebene A-A;
- Fig. 3: die Durchführungsvorrichtung 1 von Figur 1 in einer Explosionsdarstellung mit der Hutmutter 2, einem holzzylindrischen Dichtungsteil 3, dem Dichtungsring 4, einem Lamellenkorb 5, dem Stutzen 6 und dem ringförmigen Dichtungselement 7 in koaxialer Ausrichtung zueinander;
- Fig. 4: die Durchführungsvorrichtung 1 von Figur 1 in einer Explosionsdarstellung in einem Schnitt entlang der in Figur 1 eingezeichneten Schnittebene A-A;
- Fig. 5: die zusammengesetzte Durchführungsvorrichtung 1 von Figur 1 in einem Schnitt durch alle Vorrichtungsteile entlang der in Figur 1 eingezeichneten Schnittebene A-A;
- Fig. 6: die Hutmutter 2 von Figur 1 mit einer Ringinnennut 23, in der der Dichtungsring 4 gehalten ist, in einem Schnitt entlang der in Figur 1 eingezeichneten Schnittebene A-A;
- Fig. 6a: den Dichtungsring 4 von Figur 1 in räumlicher Darstellung von der Seite in einem Schnitt entlang der in Figur 1 eingezeichneten Schnittebene A-A;
- Fig. 6b: einen Schnitt entlang der in Figur 1 eingezeichneten Schnittebene A-A durch den von der Seite gezeigten Dichtungsring 4 von Figur 1;
- Fig. 7: den Stutzen 6 und den Dichtungsring 4, der dicht anliegend an einer zylindrischen Dichtungswand 64 des Stutzens 6 anliegt und entlang dieser verschiebbar ist;
- Fig. 8a: den Lamellenkorb 5 von Figur 3 in räumlicher Darstellung in einem Schnitt entlang der in Figur 1 eingezeichneten Schnittebene A-A; und
- Fig. 8b: den Lamellenkorb 5 von Figur 3 von oben gesehen in einem Schnitt entlang der in Figur 1 eingezeichneten Schnittebene A-A.

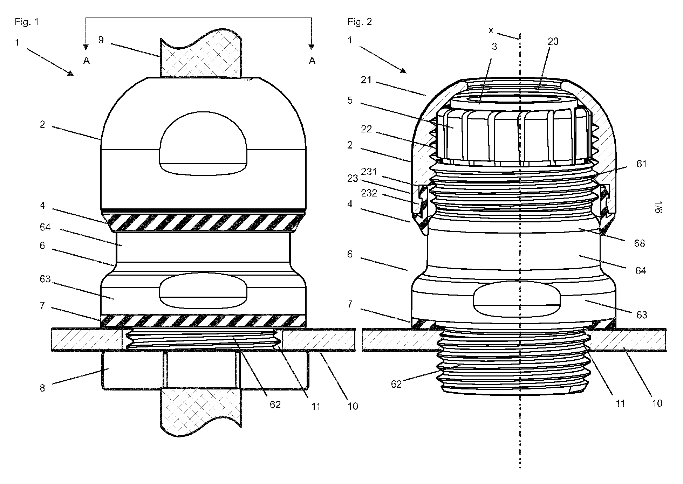

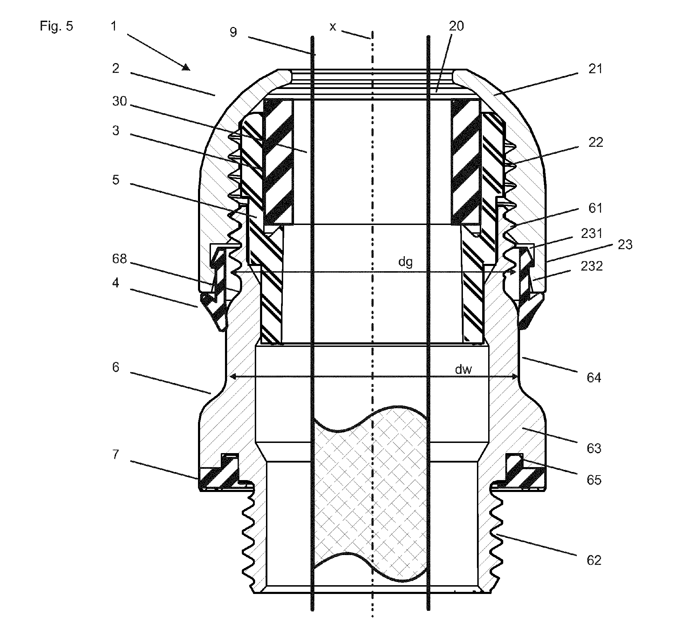

Figur 1 zeigt eine erfindungsgemässe Durchführungsvorrichtung 1 mit einem Stutzen 6, der ein erstes Aussengewinde 61 aufweist (siehe Figur 2), auf das eine Hutmutter 2 aufgesetzt ist, und der ein zweites Aussengewinde 62 aufweist, welches durch eine Wandöffnung 11 in einer Montagewand 10 hindurch geführt und mit einer Montagemutter 8 verbunden ist. Innerhalb der Durchführungsvorrichtung 1 ist ein Langformteil 9, beispielsweise ein Rohr oder ein Kabel gehalten (siehe auch Figur 5).

Figur 1 zeigt ferner, dass die Hutmutter 2 frontseitig einen elastischen Dichtungsring 4 hält, der an einem holzzylindrischen Mittelstück des Stutzens 6 anliegt, dessen Aussenwand eine Dichtungswand 64 bildet, entlang der der Dichtungsring 4 verschiebbar ist.

Der Stutzen 6 weist zudem einen Montageaussenflansch 63 auf, an dem ein ringförmiges Dichtungselement 7 anliegt, welches den Bereich zwischen dem Montageflansch 63 und der Montagewand 10 abdichtet.

Figur 1 zeigt, dass die Durchführungsvorrichtung 1 kompakt aufgebaut ist und weitgehend glatte Oberflächen aufweist, die leicht gereinigt werden können. Der Stutzen 6, die Montagemutter 8 und die Hutmutter 2 sind vorzugsweise aus Edelstahl gefertigt, so dass Korrosion vermieden wird. Der Dichtungsring 4 ist vorzugsweise aus einem widerstandsfähigen, hartelastischen Material, wie Polytetrafluorethylen, gefertigt, welches gute Gleiteigenschaften aufweist. Auch nach längerem Gebrauch und mehrfache Manipulationen, insbesondere Verschiebungen des Dichtungsrings 4 entlang der Dichtungswand 64 werden kaum Abnutzungserscheinungen auftreten. Das ringförmige Dichtungselement 7, welches eine reduzierten Belastung ausgesetzt ist, wird vorzugsweise aus einem weichelastischen Material, wie Kautschuk, insbesondere Silikonkautschuk, Fluorkautschuk, vorzugsweise einem Fluorelastomer gefertigt.

Damit der Stutzen 6 und die Hutmutter 2 mit Werkzeugen erfasst werden können, sind diese vorzugsweise mit entsprechenden Ausnehmungen versehen.

Figur 2 zeigt die Durchführungsvorrichtung 1 von Figur 1 in einem Schnitt durch die Hutmutter 2, den Dichtungsring 4 und das ringförmige Dichtungselement 7 entlang der in Figur 1 eingezeichneten Schnittebene A-A. Das zweite Aussengewinde ist in diesem Fall in eine Wandöffnung 11 der Montagewand 10 eingesetzt, die ein Gewinde aufweist. Auf eine Montagemutter wurde daher verzichtet.

Die Hutmutter 2 weist oben ein Endstück 21 mit einer Durchführungsöffnung 20, ein Innengewinde 22 und gegen den Stutzen 6 gerichtet einen Abschlussflansch 23 auf, welcher eine Ringinnennut 231 und daran anschliessend einen Ringinnenflansch 232 aufweist. Der Abschlussflansch 23 ist formschlüssig und vorzugsweise auch kraftschlüssig mit dem darin eingesetzten Dichtungsring 4 verbunden.

In den Stutzen 6 ist ferner ein Lamellenkorb 5 mit Lamellen eingesetzt, die das erste Aussengewinde 61 überragen und frontseitig an das Endstück 21 der Hutmutter 2 anstossen, welches eine domförmige oder konusförmige Innenwand aufweist. Innerhalb des Lamellenkorbs 5 ist ein Dichtungsteil 3 gehalten, welches die Lamellen überragt und frontseitig ebenfalls an die Innenwand des Endstücks 21 der Hutmutter 2 anstösst. Beim Festziehen der Hutmutter 2 werden die Lamellen und das Dichtungsteil 3 vom Endstück 21 der Hutmutter 2 nach innen verdrängt, bis das Dichtungsteil 3 das eingesetzte Langformteil 9 dicht abschliessend umfasst. Das Dichtungsteil 3 liegt in der Folge einerseits an der Innenwand der Hutmutter 2 und andererseits am Langformteil 9 an, wobei beidseitig eine optimale Abdichtung resultiert.

Figur 2 zeigt ferner, dass der Innendurchmesser des zylindrischen Abschlussflansches 23 grösser ist als der Innendurchmesser des Innengewindes 22 der Hutmutter 2. Der Dichtungsring 4 ist daher gegenüber dem Innengewinde 22 radial nach aussen versetzt gehalten und kann über das erste Aussengewinde 61 des Stutzens 6 bis zu einem Übergangsbereich 68 geführt werden. Der Übergangsbereich 68 bildet eine sich gegen die Dichtungsfläche 64 erweiternde Schulter, die gerundet ist, damit der Dichtungsring 4 ohne zusätzlichen Widerstand darüber verschoben werden kann. Bevor der Dichtungsring 4 den Übergangsbereich 68 erreicht, greift das Innengewinde 22 der Hutmutter 2 vorzugsweise in das Aussengewinde 61 des Stutzens 6 ein, wonach die Verschiebung des Dichtungsrings 4 über den Übergangsbereich 68 beim Anziehen der Hutmutter 2 automatisch erfolgt. Der Dichtungsring 4 wird daher zuerst mit der Hutmutter 2 verbunden und kann anschliessend in einfacher Weise, durch Drehung der Hutmutter 2, über den Stutzen 6 geführt werden.

Während der Verschiebung des Dichtungsrings 4 über den Übergangsbereich 68 wird dieser kontinuierlich gedehnt und gespannt, so dass er anschliessend die Dichtungswand 64 kraftschlüssig und dicht abschliessend umschliesst. Es ist gezeigt, dass die Höhe wh der Dichtungswand 64 derart gewählt ist, dass der Dichtungsring 4 in allen Positionen der Hutmutter 2, die bei der Montage von Langformteilen 9 mit unterschiedlichen Durchmessern auftreten können, an der Dichtungswand 64 anliegt.

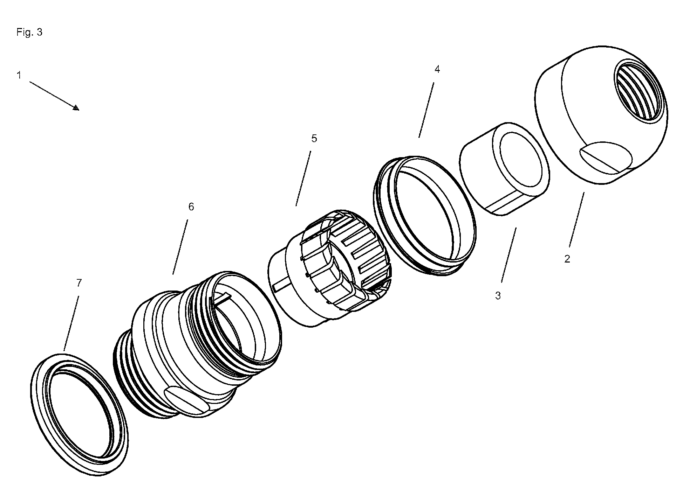

Figur 3 zeigt die Durchführungsvorrichtung 1 von Figur 1 in einer Explosionsdarstellung mit der Hutmutter 2, dem Dichtungsteil 3, dem Dichtungsring 4, dem Lamellenkorb 5, dem Stutzen 6 und dem ringförmigen Dichtungselement 7 in koaxialer Ausrichtung zueinander.

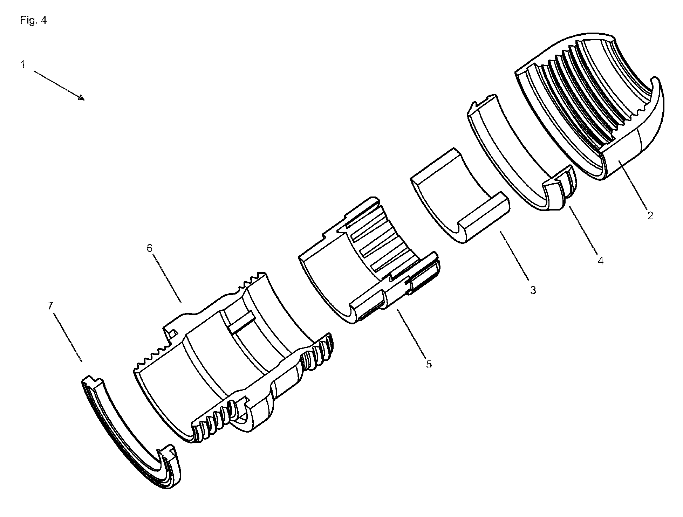

Figur 4 zeigt die Durchführungsvorrichtung 1 von Figur 1 in einer Explosionsdarstellung in einem Schnitt entlang der in Figur 1 eingezeichneten Schnittebene A-A.

Figur 5 zeigt die zusammengesetzte Durchführungsvorrichtung 1 von Figur 1 in einem Schnitt durch alle Vorrichtungsteile entlang der in Figur 1 eingezeichneten Schnittebene A-A. Das elastische Dichtungsteil 3, welches hohlzylindrisch ausgebildet ist und einen Durchgangskanal 30 aufweist, der Dichtungsring 4 und das ringförmige Dichtungselement 7 sind mit breiten Linien schraffiert, um die Elastizität dieser Teile hervorzuheben. Da die Lamellen des Lamellenkorbs 5 biegeelastisch ausgebildet sind, wurde auch die entsprechende Schraffur mit dickeren Doppellinien ausgeführt.

In der Konfiguration von Figur 5 wurde die Frontseite des Dichtungsrings 4 bereits über den Übergangsbereich 68 gestossen und liegt nun an der Dichtungswand 64 dicht abschliessend an. Es ist gezeigt, dass der Durchmesser dw der zylindrischen Dichtungswand 64 grösser ist als der Durchmesser dg des ersten Aussengewindes 61 des Stutzens 6. Der dazwischen liegende Übergangsbereich 68 erweitert sich daher vom ersten Aussengewinde 61 zur Dichtungswand 64 radial nach aussen.

Ferner ist gezeigt, dass der Montageaussenflansch 63 eine nach unten geöffnete Ringnut 65 aufweist, in die das ringförmige Dichtungselement 7 eingreift.

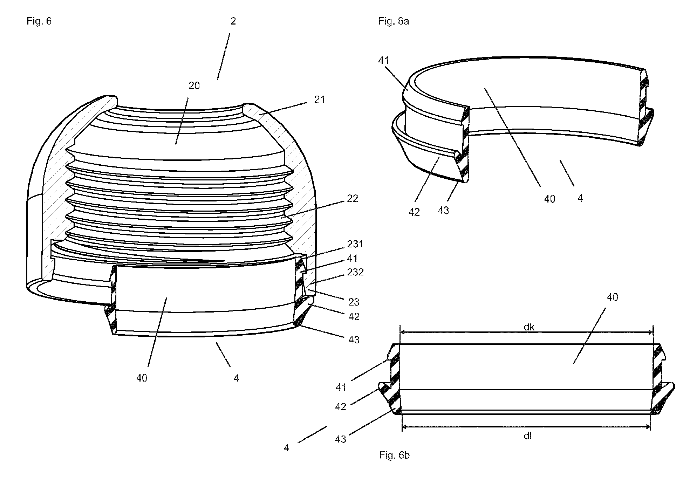

Figur 6 zeigt die Hutmutter 2 von Figur 1 und den Dichtungsring 4 in einem Schnitt entlang der in Figur 1 eingezeichneten Schnittebene A-A. Die Hutmutter 2 weist einen Abschlussflansch 23 auf, welcher ein zumindest annähernd koaxial zur Vorrichtungssachse x ausgerichtetes Zylindersegment bildet. Der Abschlussflansch 23 weist auf der Innenseite eine Ringinnennut 231 und daran anschliessend einen Ringinnenflansch 232 auf.

Der Dichtungsring 4 weist einen Ringkörper 40 auf, der oben einen ersten nach aussen gerichteten Ringaussenflansch 41 aufweist, der in die Ringinnennut 231 des Abschlussflansches 23 eingreift. Auf der Unterseite weist der Ringkörper 40 einen zweiten nach aussen gerichteten Ringaussenflansch 42 auf, der leicht nach oben ausgerichtet an der Unterseite des Abschlussflansches 23 anliegt. Der erste und der zweite Ringaussenflansch 41, 42 schliessen daher den Ringinnenflansch 232 ein und liegen kraftschlüssig daran an.

Der erste Ringaussenflansch 41 des Dichtungsrings 4 und der am Abschlussflansch 23 der Hutmutter 2 vorgesehene Ringinnenflansch 232 sind keilförmig ausgestaltet und weisen zumindest annähernd parallel zueinander ausgerichtete Keilflächen auf, die konisch verlaufen. Aufgrund der keilförmigen Ausbildung des Ringaussenflanschs 41 und des Ringinnenflanschs 232 kann der Dichtungsring 4 daher einfach in die Hutmutter 2 hinein verschoben werden.

An der Unterseite des Ringkörpers 40 ist ferner eine ringförmig verlaufende Dichtungslippe 43 vorgesehen, die in dieser vorzugsweisen Ausgestaltung zusammen mit dem zweiten Ringaussenflansch 42 einen Hebel bildet, der an der Unterseite des Abschlussflansches 23 anliegt, wodurch auch die Dichtungslippe 43 gestützt wird.

Figur 6a zeigt den Dichtungsring 4 von Figur 1 in räumlicher Darstellung von der Seite in einem Schnitt entlang der in Figur 1 eingezeichneten Schnittebene A-A.

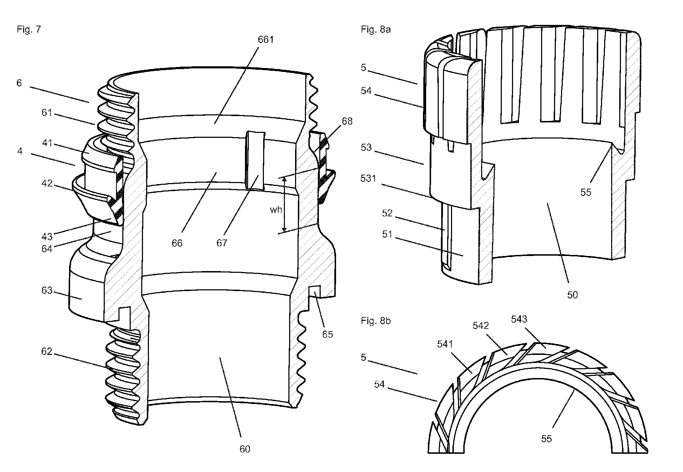

Figur 6b zeigt einen Schnitt entlang der in Figur 1 eingezeichneten Schnittebene A-A durch den von der Seite gezeigten Dichtungsring 4 von Figur 1. Es ist gezeigt, dass der Innendurchmesser dk des Ringkörpers 40 grösser ist als der Innendurchmesser dl der ringförmig verlaufenden Dichtungslippe 43, die nach innen gegen die Dichtungswand 64 geneigt ist (siehe Figur 7). Die Frontseite der Dichtungslippe 43 kann daher an der Dichtungswand 64 anliegen, während der Ringkörper 40 davon beabstandet ist.

Figur 7 zeigt den Stutzen 6 und den Dichtungsring 4 in einem Schnitt entlang der in Figur 1 eingezeichneten Schnittebene A-A. Der Dichtungsring 4 ist gegenüber der Darstellung von Figur 5 nach unten verschoben und liegt noch immer dicht abschliessend an der zylindrischen Dichtungswand 64 an. Der Dichtungsring ist über die Wandhöhe wh entlang der Dichtungswand 64 verschiebbar, welche etwa der Höhe des ersten Aussengewindes 61 des Stutzens 6 entspricht.

Innerhalb des Stutzens 6 ist ein Montageinnenflansch 66 vorgesehen, der oben eine Stützfläche 661 aufweist, auf die der Korbring 53 des in Figur 8a gezeigten Lamellenkorbs 5 aufgesetzt werden kann. Der Montageinnenflansch 66 weist zudem mehrere Haltenuten 67 auf, die parallel zur Vorrichtungssachse x ausgerichtet sind.

Figur 8a zeigt den mit einem Korbkanal 50 versehenen Lamellenkorb 5 von Figur 3 in einem Schnitt entlang der in Figur 1 eingezeichneten Schnittebene A-A. Der Lamellenkorb 5 umfasst einen Montagezylinder 51, der mit Halterippen 52 versehen ist und an den oben ein radial nach aussen versetzter Korbring 53 anschliesst. Vom Korbring werden biegeelastische Lamellen 541, 542, 543 gehalten (siehe Figur 8b), die einen Lamellenkranz 54 bilden. An der Oberseite des Montagezylinders 51 bildet dieser ferner eine dem Korbkanal 50 zugewandte Innenschulter 55, die nach oben und gegen den Korbkanal 50 keilförmig verläuft.

Der Lamellenkorb 5 wird in den Stutzen 6 eingesetzt, indem der Montagezylinder 51 mit den Halterippen 52 zu den Haltenuten 67 ausgerichtet und in den Montageinnenflansch 66 eingeführt wird bis eine vom Korbring 53 gebildete Ringschulter 531 an der Oberseite 661 des Montageinnenflanschs 66 aufliegt. In der Folge wird der Lamellenkorb 5 vom Montageinnenflansch 66 drehfest gehalten. Das erste Aussengewinde 61 des Stutzens 6 wird dabei von den Lamellen 541, 542, 543 überragt, die an der Innenwand der Hutmutter 2 anliegen.

Figur 8b zeigt den Lamellenkorb 5 von Figur 3 von oben gesehen in einem Schnitt entlang der in Figur 1 eingezeichneten Schnittebene A-A. Es ist ersichtlich, dass die Lamellen 541, 542, 543 schräge nebeneinander liegen und dadurch radial nach innen verschoben werden können, wo sie sich weiter überlappen.

### Bezugszeichenliste

- 1: Durchführungsvorrichtung
- 10: Montagewand, Gehäusewand
- 11: Wandöffnung in der Montagewand
- 2: Hutmutter
- 20: Durchführungsöffnung
- 21: Endstück mit domförmiger oder konischer Innenwand
- 22: Innengewinde
- 23: Abschlussflansch
- 231: Ringinnennut
- 232: Ringinnenflansch
- 3: Dichtungsteil
- 30: Aufnahmekanal
- 4: Dichtungsring
- 40: Ringkörper
- 41: erster Ringaussenflansch
- 42: zweiter Ringaussenflansch
- 43: Dichtungslippe
- 5: Lamellenkorb
- 50: Korbkanal
- 51: Montagezylinder
- 52: Halterippen
- 53: Korbring
- 531: Ringschulter
- 54: Lamellenkranz mit Lamellen 541, 542, 543
- 55: Innenschulter
- 6: Stutzen
- 60: Stutzenkanal
- 61: erstes Aussengewinde
- 62: zweites Aussengewinde
- 63: Montageaussenflansch
- 64: Dichtungswand
- 65: Ringnut im Montageaussenflansch
- 66: Montageinnenflansch
- 661: Oberseite des Montageinnenflanschs
- 67: Haltenut
- 68: geneigter Übergangsbereich
- 7: ringförmiges Dichtungselement
- 8: Montagemutter
- 9: Rohr, Schlauch oder Kabel

## Patentansprüche

1. Vorrichtung (1) zur abgedichteten Durchführung eines Langformteils (9), eines Rohr, eines Schlauchs oder eines Kabels, durch eine Wandöffnung (11) in einer Montagewand (10), umfassend
a) einen mit der Montagewand (10) verbindbaren hohlzylinderförmigen Stutzen (6), der einen Stutzenkanal (60) und ein erstes Aussengewinde (61) aufweist,
b) eine Hutmutter (2), die eine Durchführungsöffnung (20) und ein mit dem ersten Aussengewinde (61) des Stutzens (6) verbundenes Innengewinde (22) aufweist, sowie
c) ein innerhalb der Hutmutter (2) angeordnetes Dichtungsteil (3), welches einen Aufnahmekanal (30) aufweist,
**dadurch gekennzeichnet, dass** der Stutzen (6) benachbart zum ersten Aussengewinde (61) eine zylindrische Dichtungswand (64) aufweist und dass die Hutmutter (2) benachbart zum Innengewinde (22) einen der Dichtungswand (64) zugewandten Abschlussflansch (23) aufweist, welcher einen elastischen Dichtungsring (4) hält, der die Hutmutter (2) vorzugsweise überragt und an der Dichtungswand (64) anliegt und dicht anliegend axial entlang der Dichtungswand (64) verschiebbar ist.

2. Durchführungsvorrichtung (1) nach Anspruch 1, **dadurch gekennzeichnet, dass** zwischen dem ersten Aussengewinde (61) und der zylindrischen Dichtungswand (64), die durch ein Mittelteil des Stutzens (6) oder durch eine auf den Stutzen (6) aufgesetzte Hülse gebildet ist, ein sich gegen das erste Aussengewinde (61) verjüngender Übergangsbereich (68) vorgesehen ist.

3. Durchführungsvorrichtung (1) nach Anspruch 1 oder 2, **dadurch gekennzeichnet, dass** die Dichtungswand (64) eine Wandhöhe (wh) aufweist, die entsprechend der Länge des Innengewindes (22) der Hutmutter (2) gewählt ist, so dass der Dichtungsring (4) bei allen Einstellungen der Hutmutter (2) an der Dichtungswand (64) anliegt und dass die Höhe des Abschlussflansches (23) und die Höhe des Dichtungsrings (4) derart gewählt sind, dass das erste Aussengewinde (61) des Stutzens (6) von der Kombination des Abschlussflansches (23) und des Dichtungsrings (4) bei allen Einstellungen der Hutmutter (2) vollständig überdeckt ist.

4. Durchführungsvorrichtung (1) nach Anspruch 1, 2 oder 3, **dadurch gekennzeichnet, dass** der Dichtungsring (4) einen Ringkörper (40) aufweist, an den auf der der Hutmutter (2) abgewandten Seite eine Dichtungslippe (43) anschliesst, die frontseitig entlang einem Kreis verläuft, dessen Durchmesser (dl) geringer ist als der Durchmesser (dw) der zylindrischen Dichtungswand (64).

5. Durchführungsvorrichtung (1) nach einem der Ansprüche 1 - 4, **dadurch gekennzeichnet, dass** der Ringkörper (40) des Dichtungsrings (4) auf der der Hutmutter (2) zugewandten Seite einen ersten Ringaussenflansch (41) aufweist, der in eine Ringinnennut (231) eingreift, die im Abschlussflansch (23) vorgesehen ist.

6. Durchführungsvorrichtung (1) nach Anspruch 5, **dadurch gekennzeichnet, dass** der Ringkörper (40) des Dichtungsrings (4) auf der der Hutmutter (2) zugewandten Seite einen zweiten Ringaussenflansch (42) aufweist, der an der Unterseite des Abschlussflansches (23) an einem Ringinnenflansch (232) anliegt, der vorzugsweise durch die Ringinnennut (231) begrenzt wird.

7. Durchführungsvorrichtung (1) einem der Ansprüche 1 - 6, **dadurch gekennzeichnet, dass** innerhalb des Stutzens (6) ein Lamellenkorb (5) sitzt, der einen der Durchführung des Langformteils (9) dienenden Korbkanal (50) und einen Lamellenkranz (54) aufweist, der vorzugsweise oberhalb des ersten Aussengewindes (61) des Stutzens (6) innerhalb der Hutmutter (2) gehalten ist und in dem das hohlzylinderförmige Dichtungsteil (3) angeordnet ist.

8. Durchführungsvorrichtung (1) nach Anspruch 7 **dadurch gekennzeichnet, dass** der Stutzen (6) im Stutzenkanal (60) einen Montageinnenflansch (66) aufweist, der mit wenigstens einer parallel zur Vorrichtungssachse (x) ausgerichteten Haltenut (67) versehen ist, und dass der Lamellenkorb (5) einen Montagezylinder (51) aufweist, an dessen Aussenseite wenigstens eine parallel zur Vorrichtungssachse (x) verlaufende Halterippe (52) vorgesehen ist, die nur axial verschiebbar in der Haltenut (67) gehalten ist.

9. Durchführungsvorrichtung (1) nach Anspruch 8, **dadurch gekennzeichnet, dass** anschliessend an den Montagezylinder (51) ein diesen radial überragender Korbring (53) vorgesehen ist, der den Lamellenkranz (54) trägt und der eine Ringschulter (531) bildet, die auf den Montageflansch (66) abgestützt ist.

10. Durchführungsvorrichtung (1) nach Anspruche 8 oder 9, **dadurch gekennzeichnet, dass** der Montagezylinder (51) auf der Innenseite des Korbrings (53) eine Innenschulter (55) aufweist, auf die das hohlzylinderförmige Dichtungsteil (3) abgestützt ist und die vorzugsweise keilförmig nach gegen das Dichtungsteil (3) verläuft.

11. Durchführungsvorrichtung (1) nach einem der Ansprüche 7 - 10, **dadurch gekennzeichnet, dass** das konzentrisch zur Vorrichtungssachse (x) mit der Durchtrittsöffnung (20) versehene Endstück (21) der Hutmutter (2) ein domförmige oder konusförmige Innenwand aufweist, und dass das hohlzylinderförmige Dichtungsteil (3) den Lamellenkranz (54) derart überragt, so dass sowohl das obere Ende des Lamellenkranzes (54), als auch das obere Ende des Dichtungsteils (3) an der Innenwand des Endstücks (21) anliegen.

12. Durchführungsvorrichtung (1) nach einem der Ansprüche 1 - 11, **dadurch gekennzeichnet, dass** der Stutzen (6) ein zweites Aussengewinde (62) und zwischen dem ersten und dem zweiten Aussengewinde (61, 62) einen Montageaussenflansch (63) aufweist, der an der dem zweiten Aussengewinde (62) zugewandten Seite eine Ringnut (65) aufweist, in der ein ringförmiges Dichtungselement (7) gehalten ist.

13. Durchführungsvorrichtung (1) nach einem der Ansprüche 1 - 12, **dadurch gekennzeichnet, dass** der Dichtungsring (4) einen Elastizitätsmodul aufweist, der in einem Bereich von 350 MPa bis 1000 MPa oder höher, vorzugsweise bei etwa 420 MPa, liegt und dass das Dichtungsteil (3) einen Elastizitätsmodul aufweist, der in einem Bereich von 10 MPa bis 200 MPa liegt.

14. Durchführungsvorrichtung (1) nach einem der Ansprüche 1 - 13, **dadurch gekennzeichnet, dass** der Dichtungsring (4) aus einem widerstandsfähigen und elastischen Kunststoffmaterial, wie Polytetrafluorethylen gefertigt ist und dass das Dichtungsteil (3) aus Kautschuk, wie Silikonkautschuk, Fluorkautschuk, insbesondere einem Fluorelastomer besteht.

15. Durchführungsvorrichtung (1) nach einem der Ansprüche 1 - 14, **dadurch gekennzeichnet, dass** der Stutzen (6) und/oder die Hutmutter (2) aus Kunststoff oder Edelstahl gefertigt sind.

## Claims

1. Device (1) for a sealed feed-through of an elongated part (9), a tube, a hoses or a cable, through an opening (11) in a mounting wall (10), comprising
a) a hollow cylindrical fitting (6) that is connectable to the mounting wall (10) and that comprises a fitting channel (60) and a first outer thread (61),
b) a cap nut (2) with a feed-through opening (20) and with an inner thread (22) that is connected to the first outer thread (61) of the fitting (6), as well as
c) a sealing member (3) that is arranged within the cap nut (2) and that comprises a receiving channel (30),
wherein the fitting (6) comprises, neighbouring to the first outer thread (61), a cylindrical sealing wall (64) and wherein the cap nut (2) comprises, neighbouring to the inner thread (22), a closing flange (23) that faces the sealing wall (64) and that holds an elastic sealing ring (4), which preferably extends beyond the cap nut (2) and which rests on the sealing wall (64) and which, resting tightly, is axially movable along the sealing wall (64).

2. Feed-through device (1) according to claim 1, wherein between the first outer thread (61) and the cylindrical sealing wall (64), formed by a middle part of the fitting (6) or by a jacket sleeve mounted on the fitting (6), a transition region (68) is provided which narrows towards the first outer thread (61).

3. Feed-through device (1) according to claim 1 or 2, wherein the sealing wall (64) exhibits a wall height (wh) that has been selected according to the length of the inner thread (22) of the cap nut (2), so that the sealing ring (4) rests with all adjustments of the cap nut (2) on the sealing wall (64) and that the height of the closing flange (23) and the height the sealing ring (4) are selected in such a way, that the first outer thread (61) of the fitting (6) is always completely overlapped by the combination of the closing flange (23) and the sealing ring (4) with all adjustments of the cap nut (2).

4. Feed-through device (1) according to claim 1, wherein the sealing ring (4) comprises a ring body (40) with an annular sealing lip (43) located at the side distal of the cap nut (2), which sealing lip (43) exhibits along its front side a circle with a diameter (dl) that is smaller than the diameter (dw) of the cylindrical sealing wall (64).

5. Feed-through device (1) according to claim 4, wherein the ring body (40) comprises a first outer annular flange (41) on the side facing the cap nut (2), which first outer annular flange (41) engages in an inner annular groove (231) that is provided in the closing flange (23) of the cap nut (2).

6. Feed-through device (1) according to claim 5, wherein the ring body (40) of the sealing ring (4) comprises a second outer annular flange (42) on the side distal to the cap nut (2), which second outer annular flange (42) abuts on the lower side of the closing flange (23) on an inner annular flange (232), which is preferably limited by the an inner annular groove (231).

7. Feed-through device (1) according to one of the claims 1 - 6, wherein a clamping collet (5) is seated within the fitting (6), which clamping collet (5) comprises a collet channel (50) serving for the feed-through of the elongated part (9) and comprising a lamella crown (54) that is held preferably above the first outer thread (61) of the fitting (6) within the cap nut (2) and in which the hollow cylindrical sealing member (3) is arranged.

8. Feed-through device (1) according to claim 7 wherein the fitting (6) comprises within the fitting channel (60) an inner mounting flange (66), which is provided with at least one guiding groove (67) that is aligned in parallel to the longitudinal axis (x) and wherein the clamping collet (5) comprises a mounting cylinder (51) having a guiding fin (52) on its outer side that is extending in parallel to the longitudinal axis (x) and that is held only axially movable within the guiding groove (67).

9. Feed-through device (1) according to claim 8, wherein adjacent to the mounting cylinder (51) a collet ring (53) is arranged, that radially extends beyond the mounting cylinder (51) and that supports the lamella crown (54) and that forms a ring shoulder (531), which is seated on the inner mounting flange (66).

10. Feed-through device (1) according to claim 8 or 9, wherein the mounting cylinder (51) comprises on the inner side of the collet ring (53) an inner shoulder (55), on which the hollow cylindrical sealing member (3) is seated and that preferably extends wedge-shape towards the sealing member (3).

11. Feed-through device (1) according to one of the claims 7 - 10, wherein the end piece (21) of the cap nut (2), which has concentrically to the longitudinal axis (x) a feed-through opening (20), comprises a dome-shaped or conically-shaped inner wall, and that the hollow cylindrical sealing member (3) overlaps the lamella crown (54) in such a way, that the upper end of the lamella crown (54) as well as the upper end of the sealing member (3) abut the inner wall of the end piece (21).

12. Feed-through device (1) according to claim to one of the claims 1 - 11, wherein the fitting (6) comprises a second outer thread (62) and between the first and the second outer thread (61, 62) an outer mounting flange (63), which comprises, on the side facing the second outer thread (62), an annular groove (65), in which an annular sealing element (7) is held.

13. Feed-through device (1) according to claim to one of the claims 1 - 12, wherein the sealing ring (4) comprises an elasticity modulus, which lies in a range between 350 MPa to 1000 MPa or higher, preferably at approximately 420 MPa and that the sealing member (3) comprises an elasticity modulus, which lies in a range between 10 MPa to 200 MPa.

14. Feed-through device (1) according to claim to one of the claims 1 - 13, wherein the sealing ring (4) is made from a hard-wearing elastic plastic, such as Polytetrafluorethylene and that the sealing member (3) consists of caoutchouc, such as silicone caoutchouc, fluoro caoutchouc, particularly of a fluoro rubber.

15. Feed-through device (1) according to claim to one of the claims 1 - 14, wherein the fitting (6) and/or the cap nut (2) are made from plastic or high-quality steel.

## Revendications

1. Dispositif (1) pour le passage étanche d'une pièce allongée (9), un tube, un tuyau flexible ou un câble par une ouverture (11) dans une paroi de montage (10), comprenant
a) une tubulure (6) cylindrique creuse pouvant être reliée à la paroi de montage (10), qui présente un canal de tubulure (60) et un premier filet externe (61),
b) un écrou borgne (2), qui présente une ouverture de passage (20) et un filet interne (22) relié au premier filet externe (61) de la tubulure (6), ainsi
c) qu'une pièce d'étanchéité (3) disposée à l'intérieur de l'écrou borgne (2) et comprenant un canal de logement (30),
**caractérisé en ce que** la tubulure (6) présente à proximité du premier filet externe (61) une paroi cylindrique d'étanchéité (64), et **en ce que** l'écrou borgne (2) comprend, à proximité du filet interne (22), une bride de fermeture (23) qui fait face à la paroi d'étanchéité (64) et qui maintient une bague (4) élastique d'étanchéité (64) qui s'étend de préférence au-delà de l'écrou borgne (2) et qui repose sur la paroi d'étanchéité (64) de manière étanche et est coulissante axialement le long de la paroi d'étanchéité (64).

2. Dispositif de passage (1) selon la revendication 1, **caractérisé en ce qu'**il est prévu entre le premier filet externe (61) et la paroi d'étanchéité cylindrique (64) qui est formée par une partie médiane de la tubulure (6) ou par une douille placée sur la tubulure (6) une zone de transition (68) qui se rétrécie en direction du premier filet externe (61).

3. Dispositif de passage (1) selon la revendication 1 ou 2, **caractérisé en ce que** la paroi d'étanchéité (64) présente une hauteur de paroi (wh) qui est sélectionnée en fonction de la longueur du filet interne (22), de sorte que la bague d'étanchéité (4) est appliquée contre la paroi d'étanchéité (64) pour tous les ajustements de l'écrou borgne (2) et **en ce que** la hauteur de la bride de fermeture (23) et la hauteur de la bague d'étanchéité (4) sont sélectionnées de sorte que le premier filet externe (61) de la tubulure (6) est complètement recouvert par la combinaison de la bride de fermeture (23) et de la bague d'étanchéité (4) pour tous les ajustements de l'écrou borgne (2).

4. Dispositif de passage (1) selon la revendication 1, 2, ou 3, **caractérisé en ce que** la bague d'étanchéité (4) présente un corps annulaire (40) qui se prolonge sur la face détournée de l'écrou borgne (2) par une lèvre d'étanchéité qui s'étend en face avant le long d'un cercle dont le diamètre (d1) est inférieur au diamètre (dw) de la paroi cylindrique d'étanchéité (64).

5. Dispositif de passage (1) selon l'une des revendications 1 à 4, **caractérisé en ce que** le corps annulaire (40) de la bague d'étanchéité (4) présente sur la face tournée vers l'écrou borgne (2) une première bride externe annulaire (41) qui s'engage dans une rainure annulaire interne (231) prévue dans la bride de fermeture (23).

6. Dispositif de passage (1) selon la revendication 5, **caractérisé en ce que** le corps annulaire (40) de la bague d'étanchéité (4) présente sur la face tournée vers l'écrou borgne (2) une seconde bride externe annulaire (42) qui est appliquée sur la face inférieure de la bride de fermeture (23) contre une bride interne annulaire (232) qui est limitée de préférence par la rainure interne annulaire (231).

7. Dispositif de passage (1) selon l'une des revendications 1 à 6, **caractérisé en ce qu'**à l'intérieur de la tubulure (6), repose une corbeille de lamelles (5) qui présente un canal de corbeille (50) servant au passage de la pièce allongée (9) et une couronne de lamelles (54) qui est maintenue de préférence au-dessus du premier filet externe (61) de la tubulure (6) à l'intérieur de l'écrou borgne (2) et dans lequel est disposée la pièce d'étanchéité cylindrique creuse (3).

8. Dispositif de passage (1) selon la revendication 7, **caractérisé en ce que** la tubulure (7) présente dans le canal de tubulure (60) une bride interne de montage (66) qui est munie au moins d'une rainure de maintien (67) dirigée parallèlement à l'axe de dispositif (x) et **en ce que** la corbeille de lamelles (5) présente un cylindre de montage (51) sur la face externe duquel il est prévu au moins une nervure de maintien (52) s'étendant parallèlement à l'axe de dispositif (x).

9. Dispositif de passage (1) selon la revendication 8, **caractérisé en ce qu'**il est prévu dans le prolongement du cylindre de montage (51) une bague de corbeille (53) qui s'étend au-delà du cylindre de montage (51) et qui porte la couronne de lamelles (54) et forme un épaulement annulaire (531) qui prend appui sur la bride de montage (66).

10. Dispositif de passage (1) selon la revendication 8 ou 9, **caractérisé en ce que** le cylindre de montage (51) présente sur la face interne de la bague de corbeille (53) un épaulement interne sur lequel prend appui la pièce d'étanchéité creuse cylindrique (3) et qui s'étend de préférence en forme de cône en direction de la pièce d'étanchéité (3).

11. Dispositif de passage (1) selon l'une des revendications 7 à 10, **caractérisé en ce que** la pièce d'extrémité (21) de l'écrou borgne (2) est munie d'une ouverture de passage (20) concentrique à l'axe de dispositif (x) et présente une paroi interne en forme de dôme ou de cône, et **en ce que** la pièce d'étanchéité (3) creuse cylindrique chevauche la couronne de lamelles (54) de sorte qu'aussi bien l'extrémité supérieure de la couronne à lamelle (54) que l'extrémité supérieure de la partie d'étanchéité (3) s'appliquent contre la paroi interne de la pièce d'extrémité (21) .

12. Dispositif de passage (1) selon l'une des revendications 1 à 11, **caractérisé en ce que** la tubulure (6) présente un second filet externe (62) et, entre le premier et le second filet externe (61, 62), une bride externe de montage (63) qui présente, sur la face tournée vers le second filet externe (62), une rainure annulaire (65) dans laquelle est maintenu un élément d'étanchéité annulaire (7).

13. Dispositif de passage (1) selon l'une des revendications 1 à 12, **caractérisé en ce que** la bague d'étanchéité (4) présente un module d'élasticité compris entre 350 Mpa et 1000 MPa ou plus, de préférence environ de 450 MPa et **en ce que** la pièce d'étanchéité (3) présente un module d'élasticité compris entre 10 MPa et 200 MPa.

14. Dispositif de passage (1) selon l'une des revendications 1 à 13, **caractérisé en ce que** la bague d'étanchéité (4) est fabriquée une matière plastique résistante et élastique telle que du polytétrafluoroéthylène et **en ce que** la pièce d'étanchéité (3) se compose de caoutchouc, tel que du caoutchouc siliconé, du caoutchouc fluoré, en particulier un élastomère fluoré.

15. Dispositif de passage (1) selon l'une des revendications 1 à 14, **caractérisé en ce que** la tubulure (6) et/ou l'écrou borgne (2) sont fabriqués en matière plastique ou en acier inoxydable.
